# EUROPEAN PATENT APPLICATION

(11) **EP 4 799 755 A1**
(43) Date of publication of application: **02.09.2026**
(21) Application number: 26157815.7
(22) Date of filing: 11.02.2026
(51) Int. Cl.: B23P 19/06, B21J 15/04, B25B 27/14, F16B 37/06

(54) **APPARATUS FOR APPLYING THREADED INSERTS, METHOD FOR APPLYING A DEFORMATION THREADED INSERT AND METHOD FOR APPLYING A SECOND INSERT**

(30) Priority: 26.02.2025 IT 202500003834
(71) Applicant: Cosberg S.p.A., 24030 Terno D'Isola (Bergamo) (IT)
(72) Inventor: VISCARDI, Gianluigi Carlo, I-24030 Terno d'Isola, BERGAMO (IT)
(74) Representative: Genito, Elena

(57) **Abstract**

An apparatus (1) for applying a threaded insert (9) to a receiving body (90) comprises a frame (10), a motor assembly (2), a drive shaft (4) and a working head (3). The insert (9) has a flat head (91) and an internally threaded shank (92). The shaft (4), driven by the motor assembly (2), moves the working head (3), which supports a tool (8) having a retaining portion (81) and a threaded portion (82). A linear movement device (51) translates the shaft (4) along a working axis (X) between two engagement configurations of the working head (3): a first configuration (A), in which rotation of the working head (3) is allowed to screw/unscrew the tool (8) into/from the insert (9), and a second configuration (B), in which translation of a pulling portion (35) of the working head (3) is allowed to pull the insert (9).

## Description

### Field of application

The present invention relates to an apparatus for applying threaded inserts, preferably deformation threaded inserts, also known as pull-out inserts, and threaded inserts of the time-sert^{®} or heli-coil^{®} type.

Deformation threaded inserts, in particular, consist of an internally threaded shank and an upper head suitable for remaining abutting against the receiving body, outside the seat in which they are inserted. Such elements make it possible to create threads in sheet metal or other materials wherein direct threading would be difficult or impossible.

For application, the threaded insert is currently manually screwed onto the mandrel of the riveting tool, then inserted into the specially made hole in a receiving body. The riveting tool then applies a tensile force to the mandrel, causing deformation of the body of the insert, which deforms on the opposite side of the receiving body, thereby securing it in position. Finally, the mandrel is unscrewed, usually manually, leaving the internal thread ready for use.

Threaded inserts of the time-sert^{®} type have a cylindrical shape with an external thread that is screwed into a pre-threaded receiving hole and an internal thread.

Such inserts are currently applied in receiving holes by means of various manual tools that allow the insert to be screwed into the pre-threaded hole and an additional internal tapping operation to be carried out within the insert to lock it by deformation in the receiving hole.

At present, there are no machines capable of conveniently and effectively carrying out the complete insertion of such inserts and, disadvantageously, the process necessarily includes steps that are still largely manual.

Moreover, disadvantageously, to date there are no devices suitable for performing the application of both types of inserts described, but each requires its own dedicated device and tool, the latter also varying depending on the diameter of the insert to be applied.

This is particularly disadvantageous in situations wherein the application of both types of inserts is required in confined spaces, for example in frames and bodyworks of high-performance vehicles such as supercars.

### Summary of the invention

There is therefore a strongly felt need to make available an apparatus and processes for applying such inserts, capable of overcoming the drawbacks typical of the state of the art.

In particular, the object of the present invention is to provide an apparatus for applying a threaded insert that is compact, reliable and capable of carrying out both screwing and unscrewing operations as well as the pulling operation to cause deformation of the insert.

A further object of the present invention is to provide an apparatus that is versatile and allows, through simple replacements, the application of further types of inserts using the same mechanisms and the same motor assemblies.

This requirement is met by an apparatus according to claim 1 and by a method for applying a deformation threaded insert and by a method for applying a threaded insert and by a method for applying an insert to be tapped. The claims dependent thereon describe preferred or advantageous embodiments of the invention, involving further advantageous aspects.

The present invention offers a series of significant advantages over existing solutions in the field of applying threaded inserts. One of the main benefits is the ability of the apparatus to allow rapid and efficient application of threaded inserts, including those of the time-sert^{®} type. This is made possible by the innovative design of the apparatus, which integrates into a single device all the operations necessary for applying the inserts. Traditionally, the application of such inserts required the use of multiple tools and operational steps, often involving a considerable expenditure of time and resources. The present invention overcomes these limitations by providing a system that combines screwing, unscrewing and pulling operations in a single compact unit.

The compactness of the apparatus is another crucial aspect contributing to its effectiveness. Thanks to the strategic arrangement of the electric motor and the transmission system, the apparatus is designed to be extremely compact, making it particularly suitable for operating in confined spaces. This represents a significant advantage in applications such as the interior of vehicle bodyworks, where space is limited and accessibility is often a challenge. The ability to operate in such environments without compromising functionality or efficiency is a testament to the advanced design of the apparatus.

A further advantage of the invention is the reduction of stresses on the motor during operations. The configuration of the transmission system and the frame is such as to allow the apparatus to operate with heavy torques without transferring stresses to the motor. This not only extends the service life of the motor, but also improves the overall reliability of the system. In many industrial applications, the ability to handle high loads without damaging internal components is essential to maintaining productivity and reducing maintenance costs.

The apparatus is designed to perform all operations along the same working axis, an aspect that significantly reduces the overall dimensions of the device. This feature not only improves operational efficiency, but also simplifies the installation and use of the apparatus. In an industrial context, where space and efficiency are critical factors, the ability to operate along a single working axis represents a significant competitive advantage.

Another innovative aspect of the invention is the prevention of misalignment of components during operations. The locking assemblies with toothed ferrules and contrast teeth are designed to prevent free rotation of the connection hubs, maintaining correct alignment and ensuring that operations are carried out with precision. This level of control is essential for applications requiring a high degree of accuracy, such as the assembly of complex mechanical components.

The ease of tool replacement is another key advantage of the apparatus. The coupling and releasing means allow quick and easy replacement of the tool supported by the working head. This feature is particularly useful in production environments where tools must be frequently changed to accommodate different types of inserts. The possibility of using a single device to install a variety of inserts reduces the need for multiple pieces of equipment, simplifying inventory management and reducing operating costs.

The automation of the apparatus and the reduction of manual actions required from the user represent a further improvement over existing technologies. The integration of linear movement devices and automated control systems eliminates the need for manual intervention, reducing the risk of human error and increasing productivity. In an era in which automation is increasingly important to maintain competitiveness, the invention provides a system that perfectly aligns with modern production requirements.

Furthermore, the versatility of the apparatus in applying different types of inserts represents a significant advantage. The apparatus is designed to apply both deformation threaded inserts and inserts having an internal and an external thread. This capability is made possible by the configuration of the working head and the interchangeable tools, which allow the user to quickly adapt the apparatus to the specific requirements of the application. In an industrial context, where flexibility and the ability to rapidly adapt to new needs are essential, the invention provides a solution that effectively meets these requirements.

Furthermore, the invention represents a significant step forward in the field of applying threaded inserts. The combination of speed, compactness, reduction of stresses, operations along a single axis, prevention of misalignment, ease of tool replacement, automation and versatility makes the apparatus a highly efficient and reliable solution for a wide range of industrial applications. These advantages not only improve operational efficiency, but also reduce costs and increase productivity, offering significant value to end users.

### Description of the drawings

The features and advantages of the apparatus and of the above-mentioned methods will in any case become evident from the following description of some preferred embodiments, given by way of non-limiting example, with reference to the accompanying figures, in which:

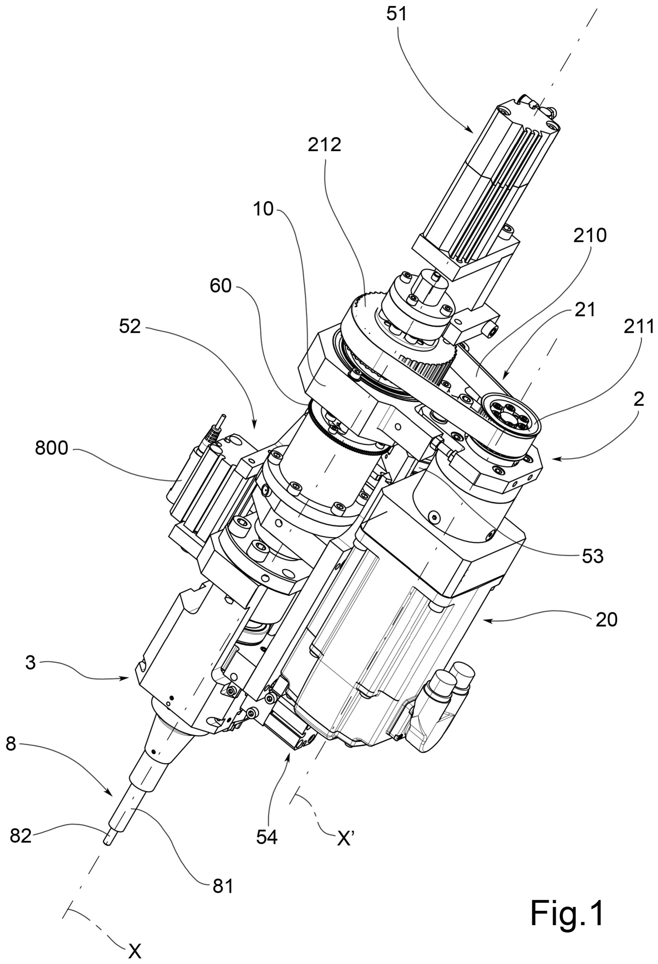

- Figure 1 shows a perspective view of an apparatus in one embodiment of the present invention;

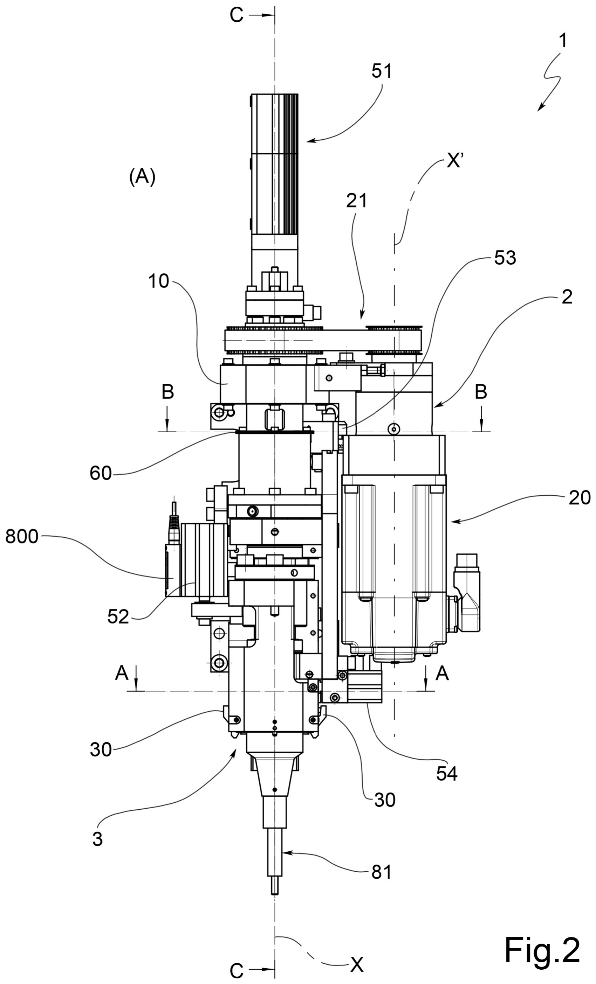

- Figure 2 shows a front view of an apparatus in one embodiment of the present invention, in the first configuration A, in which the working head supports a tool for a deformation threaded insert;
- Figure 3a shows a cross-sectional view of the apparatus of figure 2, cut along the plane A-A shown in figure 2;
- Figure 3b shows a cross-sectional view of the apparatus of figure 2, cut along the plane B-B shown in figure 2;

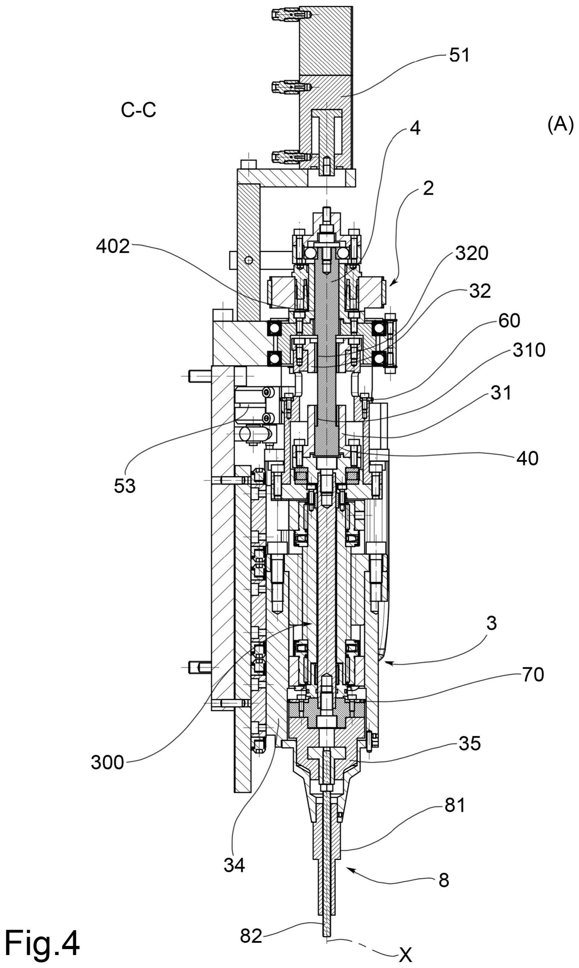

- Figure 4 shows a longitudinal section of the apparatus of figure 2, cut along the plane C-C shown in figure 2;
- Figure 5 shows a sequence of longitudinal sections of an apparatus in one embodiment of the present invention, showing the operating steps of a method for applying a deformation threaded insert, in one embodiment of the present invention;
- Figure 6 shows a sequence of longitudinal sections of an apparatus in one embodiment of the present invention, showing the operating steps of a method for applying a deformation threaded insert in one embodiment of the present invention;

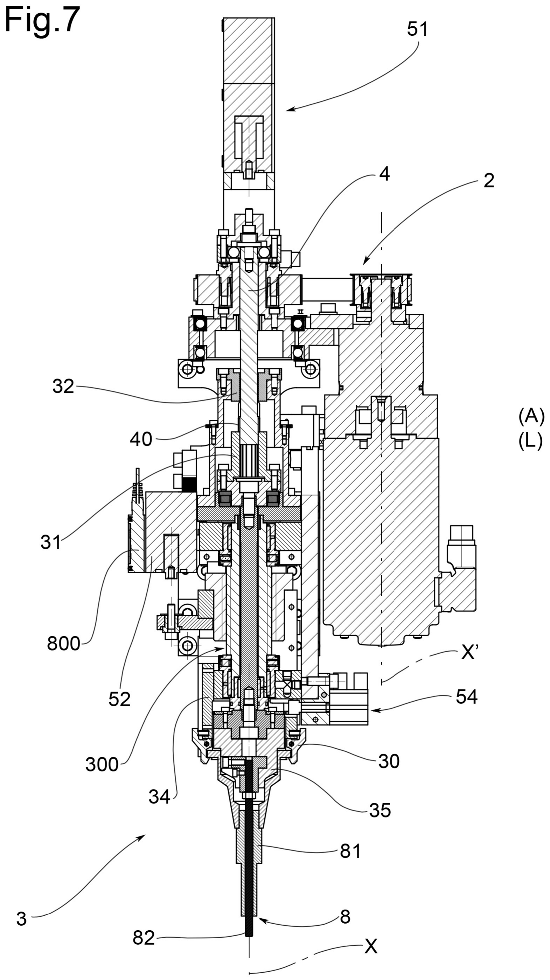

- Figure 7 shows a longitudinal section of an apparatus in one embodiment of the present invention, in the first configuration A and in which the head is in the lowered position L;

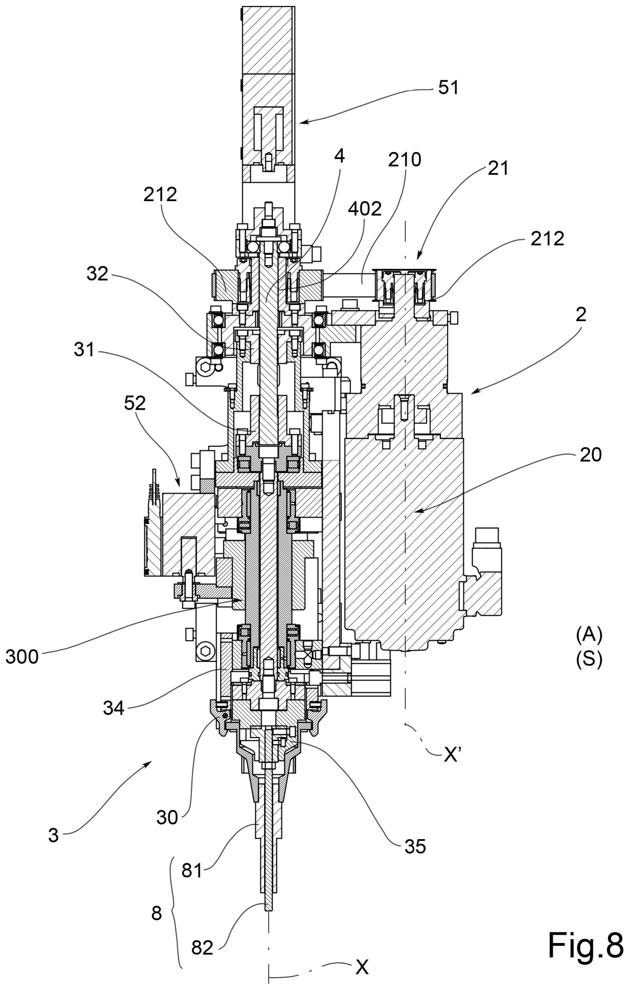

- Figure 8 shows a longitudinal section of an apparatus in one embodiment of the present invention, in the first configuration A and in which the head is in the raised position S;

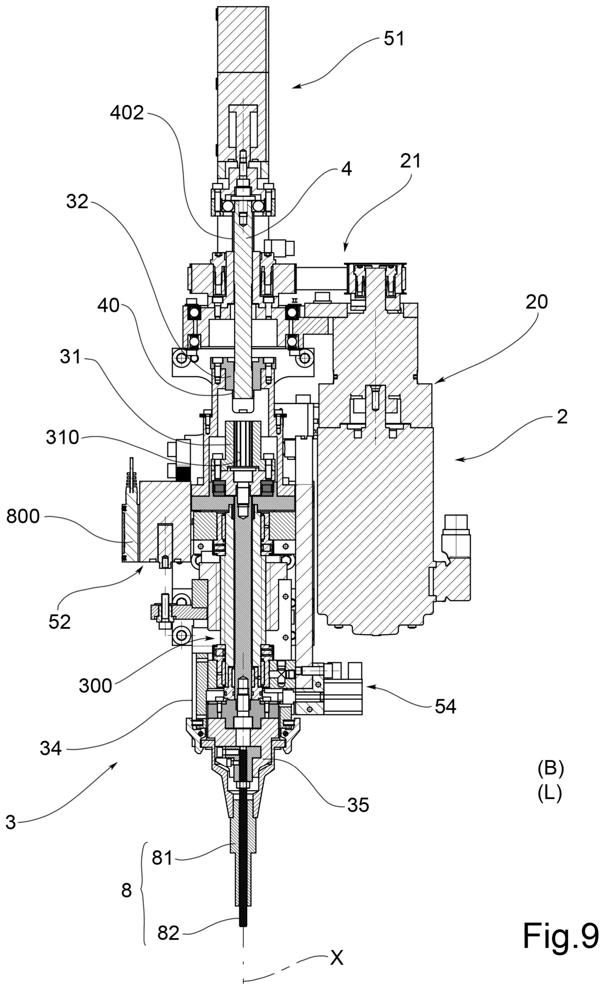

- Figure 9 shows a longitudinal section of an apparatus in one embodiment of the present invention, in the second configuration B and in which the pulling portion is in the lowered position L;

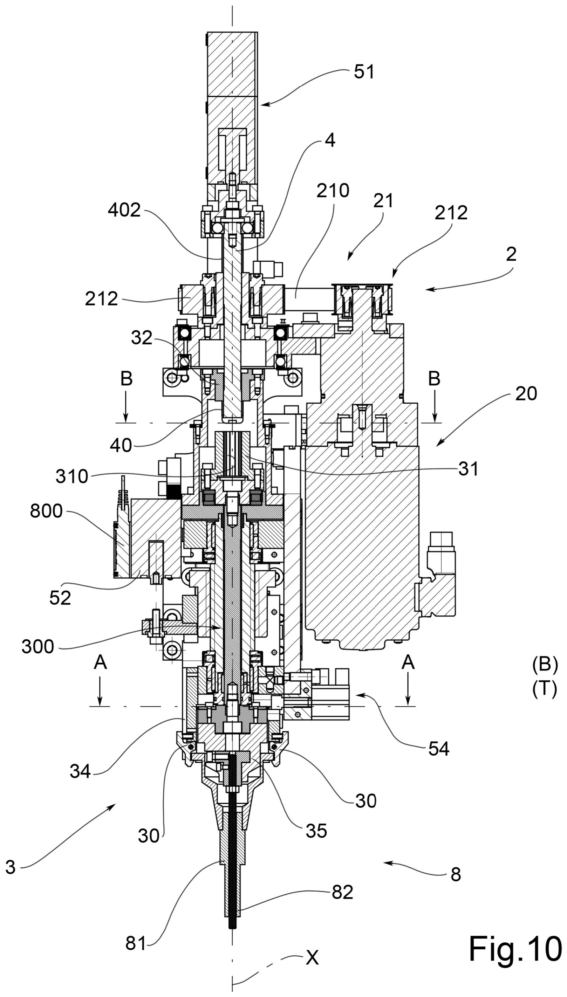

- Figure 10 shows a longitudinal section of an apparatus in one embodiment of the present invention, in the second configuration B and in which the pulling portion is in the pulled position T;
- Figure 11a shows a cross-sectional view of the apparatus of figure 10, cut along the plane A-A shown in figure 10;
- Figure 11b shows a cross-sectional view of the apparatus of figure 10, cut along the plane B-B shown in figure 10;

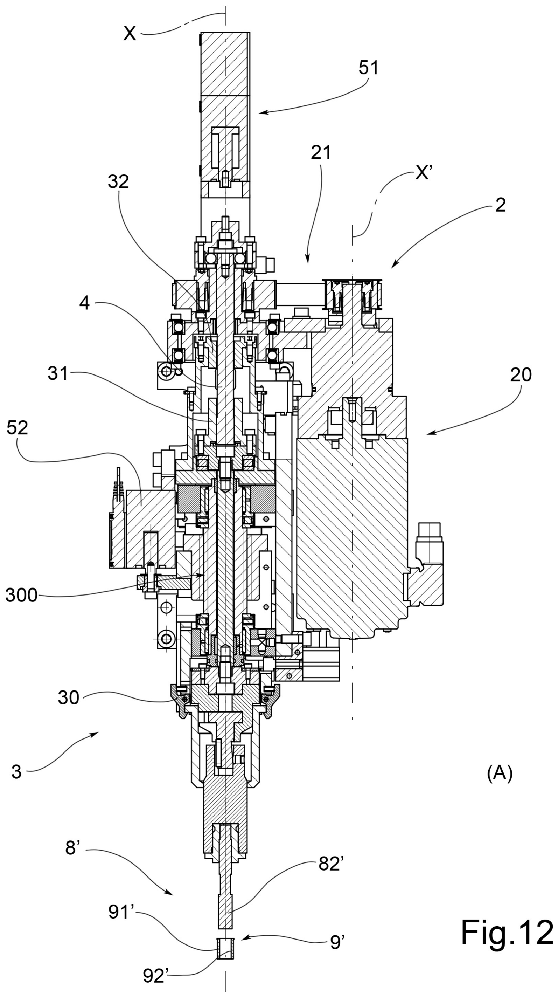

- Figure 12 shows a longitudinal section of an apparatus in one embodiment of the present invention, in the first configuration A, in which the working head supports a second tool for a second insert;
- Figure 13 shows a sequence of longitudinal sections of an apparatus in one embodiment of the present invention, showing the operating steps of a method for applying a second insert, in one embodiment of the present invention.

### Detailed description

With reference to the above-mentioned figures, reference numeral 1 generally indicates an apparatus 1 for applying an insert 9, preferably a deformation threaded insert 9, to a receiving body 90, for example to the shell of a vehicle.

The insert 9 comprises a head 91, preferably a flat head, and an internally threaded shank 92.

The apparatus 1 comprises a frame 10 which supports a motor assembly 2.

The frame 10 is the housing of the apparatus 1 and preferably comprises a plurality of brackets, casings and joints that support the motor assembly 2 and the other parts of the device defined below.

Preferably, the frame 10 is constrainable to a movable arm suitable for moving the apparatus 1 in space.

In the apparatus 1, preferably, the frame 10 is fixed.

Furthermore, the apparatus 1 comprises a drive shaft 4 extending along and about a working axis X and supported by the frame 10 and operatively connected to the motor assembly 2 and actuatable in rotation about said working axis X by the motor assembly 2.

The apparatus 1 further comprises a working head 3 supported by the frame 10 and operatively connected to the drive shaft 4 and suitable for supporting a tool 8.

The tool 8 comprises a retaining portion 81 suitable for abutting against the flat head 91 of the insert 9 and a threaded portion 82 suitable for engaging the shank of the insert 9.

The apparatus 1 further comprises a linear movement device 51 operatively connected to the drive shaft 4 for actuating it in translation along the working axis X with respect to the working head 3.

Preferably, the linear movement device 51 is a cylinder, even more preferably a pneumatic cylinder.

In other words, the drive shaft 4, in addition to rotating about the working axis X by virtue of the actuation received from the motor assembly 2, can perform a translational movement with respect to the working head 3 by the action of the linear movement device 51.

According to the present invention, the working head 3 comprises a first connection hub 31 and a second connection hub 32.

The first connection hub 31 and the second connection hub 32 also extend along and about the working axis X.

According to the invention, the drive shaft 4 is movable by the linear movement device 51 along the working axis X between a first configuration A, in which the drive shaft 4 rotationally engages the first connection hub 31 and releases the second connection hub 32, and a second configuration B, in which the drive shaft 4 rotationally engages said second connection hub 32 and releases the first connection hub 31.

In other words, in the first configuration A the working head 3 is engaged with the drive shaft 4 by virtue of the engagement with the first connection hub 31, whereas in the second configuration B the working head 3 is engaged with the drive shaft 4 by virtue of the engagement with the second connection hub 32.

Such different engagements result in different operating modes of the working head, as described below.

According to the invention, in the first configuration A the coupling between the drive shaft 4 and the first connection hub 31 allows converting a rotation of the drive shaft 4 about the working axis X into a rotation of the working head 3 about the working axis X, allowing the screwing and/or unscrewing of the insert 9 on the tool 8, in particular allowing the screwing and/or unscrewing of the threaded portion 82 of the tool 8 into the shank 92 of the insert 9.

According to the invention, the working head 3 comprises a retaining portion 34 suitable for remaining integral with the retaining portion 81 of the tool 8 and a pulling portion 35 connected to the second connection hub 32 and suitable for remaining integral with the threaded portion 82 of the tool 8.

According to the invention, in the second configuration B the coupling between the drive shaft 4 and the second connection hub 32 allows converting a rotation of the drive shaft 4 about the working axis X into a translation along the working axis X of the pulling portion 35 with respect to the retaining portion 34, allowing the insert 9 to be pulled with respect to the receiving body 90.

Advantageously, therefore, the apparatus 1 according to the present invention is suitable for carrying out both screwing and unscrewing operations and the pulling operation of the insert to cause its deformation, by means of the same working head, exclusively by varying the linear position of the drive shaft along the working axis.

In a preferred embodiment, the drive shaft 4 has an at least partially grooved outer surface 40 and the first connection hub 31 and the second connection hub 32 each have an at least partially grooved inner surface 310, 320 in a couplable manner by meshing, for example by form-fitting engagement, with the outer surface 40 of the grooved shaft 4.

Preferably, in the first configuration A the drive shaft 4 is rotationally integral with the first connection hub 31.

In one embodiment, in the second configuration B the drive shaft 4 is rotationally integral with the second connection hub 32.

In other words, in a particularly advantageous embodiment, the drive shaft 4 is at least partially a grooved shaft, insertable by meshing alternately into an internally grooved cavity of the first or of the second connection hub.

In one embodiment, the motor assembly 2 comprises an electric motor 20 and a transmission system 21 which connects said electric motor 20 to the drive shaft 4, preferably characterized by a reduction ratio equal to 2.

Preferably, the electric motor 20 predominantly extends along a motor axis X' parallel to and not coincident with the working axis X, laterally with respect to the working head 3 and preferably cantilevered with respect to the frame 10.

Advantageously, thanks to such a configuration, the stresses due to the operations carried out on the insert are discharged only onto the frame 10 and not onto the motor assembly.

Furthermore, advantageously, in such a configuration the apparatus is compact and has reduced overall dimensions along the working axis and is suitable for operating also in confined spaces, such as for example the interior of a vehicle.

According to a further advantage, the connection between the motor and the shaft by means of the transmission allows increasing the torque applied to the drive shaft.

Preferably, the transmission system 21 is a belt transmission system and comprises a belt 210 which wraps around a driving pulley 211 connected to the motor shaft coming from the electric motor 20 and a driven pulley 212 connected to the drive shaft 4.

Preferably, the drive shaft 4 is connected to the driven pulley 212 by means of a further grooved receiving portion 402.

In one embodiment, the apparatus 1 comprises a second linear movement device 52, preferably a second pneumatic cylinder 52, operatively connected to the working head 3.

In a particularly advantageous embodiment, in the first configuration A said second linear movement device 52 is suitable for actuating the working head 3 in translation along the working axis X with respect to the drive shaft 4 between a raised position S and a lowered position L.

Advantageously, in such an embodiment, approaching the insert 9 to be picked up or the receiving body 90 to be reached is allowed when the tool is already engaged with the insert 9.

In one embodiment, the second connection hub 32 is connected to a ball screw system 300, suitable for converting the rotation of the drive shaft 4 about the working axis X into a linear translation movement along said working axis X to move the pulling portion 35 between a lowered position L and a pulled position T.

Advantageously, in such an embodiment, pulling of the shank 92 of the insert 9 is allowed in order to cause its deformation and fastening to the receiving body 90.

In an alternative embodiment, the drive shaft 4 has a thread, preferably of the involute type, or a spiral or helical groove, and the second connection hub 32 has a counter-thread of the involute type, or a spiral or helical groove, suitable for engaging said thread to convert the rotation of the drive shaft 4 about the working axis X into a linear translation movement along said working axis X, in order to move the pulling portion 35 between the lowered position L and a pulled position T.

In other words, in such an embodiment, the same drive shaft 4 is threaded both longitudinally, parallel to the working axis X, and circumferentially so as to form a helix, and itself acts as a ball screw for the second connection hub 32, which is correspondingly grooved and operates as a nut, causing the translation of the pulling portion 35 along the working axis X.

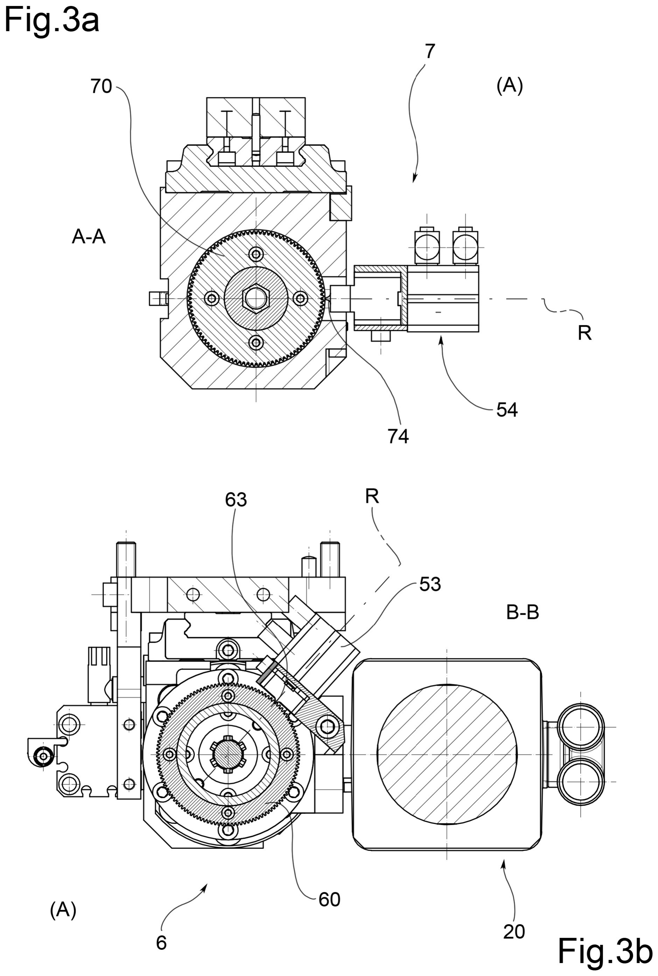

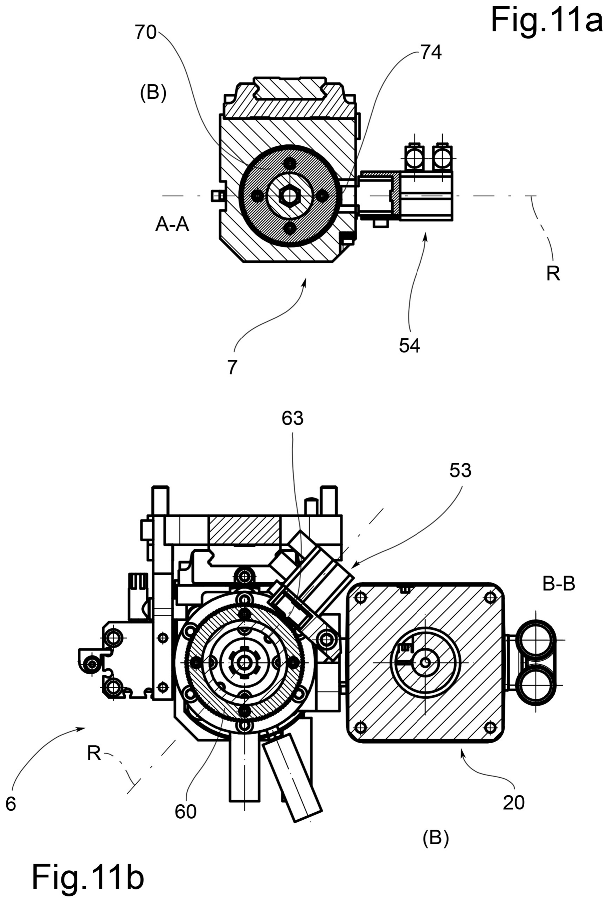

In an advantageous embodiment, with reference to figures 3b and 11b, the apparatus 1 comprises a first locking assembly 6 configured to lock the rotation of the second connection hub 32 when the drive shaft 4 is in the first configuration A.

In a preferred embodiment, said first locking assembly 6 comprises a first toothed ferrule 60 extending about the working axis X and integral with the second connection hub 32, and a first contrast tooth 63 movable, preferably in a radial direction R, to engage the first toothed ferrule 60 so as to lock the free rotation of said second connection hub 32.

Figure 3b shows the first locking assembly 6 in the active condition, that is, with the first contrast tooth 63 engaged in the first toothed ferrule 60 when the drive shaft 4 is in the first configuration A.

Figure 11b shows the first locking assembly 6 in the inactive condition, that is, with the first contrast tooth 63 spaced apart from the first toothed ferrule 60 when the drive shaft 4 is in the second configuration B.

Preferably, the apparatus 1 comprises a third linear movement device 53, preferably a third pneumatic cylinder 53, which actuates the first contrast tooth 63 in translation in the radial direction R with respect to the first toothed ferrule 60.

In a particularly advantageous embodiment, with reference to figures 3a and 11a, the apparatus 1 comprises a second locking assembly 7 configured to lock the rotation of the first connection hub 31 when the drive shaft 4 is in the second configuration B.

In a preferred embodiment, said second locking assembly 7 comprises a second toothed ferrule 70 extending about the working axis X and integral with the first connection hub 31, and a second contrast tooth 74 movable, preferably in a radial direction R, to abut against and engage the second toothed ferrule 70 in order to lock the free rotation of said first connection hub 31.

Figure 3a shows the second locking assembly 7 in the inactive condition, that is, with the second contrast tooth 74 spaced apart from the second toothed ferrule 70 when the drive shaft 4 is in the first configuration A.

Figure 11a shows the second locking assembly 7 in the active condition, that is, with the second contrast tooth 74 engaged in the second toothed ferrule 70 when the drive shaft 4 is in the second configuration B.

Preferably, the apparatus 1 comprises a fourth linear movement device 54, preferably a fourth pneumatic cylinder 54, which actuates the second contrast tooth 74 in translation in the radial direction R with respect to the second toothed ferrule 70.

In one embodiment, the apparatus 1 comprises a linear position transducer 800 configured to measure the travel of the working head 3 and/or of the tool 8 and/or of the pulling portion 35 along the working axis X.

In a particularly advantageous embodiment, the working head 3 comprises coupling and releasing means 30 suitable for allowing the coupling and selectively the releasing for changing the tool 8.

According to one aspect of the invention, the apparatus 1 is suitable for applying a threaded insert 9 or a second insert 9' to a receiving body 90, wherein the insert 9 comprises a flat head 91 and an internally threaded shank 92 and the second insert 9' comprises a body having an internal thread 92' and an external thread 93'.

According to this aspect, the apparatus 1 comprises a frame 10, a motor assembly 2 supported by the frame 10, a drive shaft 4 extending along and about a working axis X, operatively connected to the motor assembly 2 and actuatable in rotation about the working axis X, and a working head 3 supported by the frame and operatively connected to the drive shaft 4.

According to this aspect of the invention, the working head 3 is suitable for supporting a tool 8, which comprises a retaining portion 81 suitable for abutting against the flat head 91 of the insert 9 and a threaded portion 82 suitable for engaging the shank 92 of the insert 9.

Furthermore, the working head 3 is suitable for supporting a second tool 8' comprising a threaded portion 82' suitable for engaging the internal thread 92' of the second insert 9'.

And wherein the working head 3 comprises coupling and releasing means 30 suitable for allowing the coupling and selectively the releasing for replacing the tool 8 with the second tool 8', and/or vice versa.

Also forming the subject matter of the present invention is a method for applying a deformation threaded insert 9 to a receiving body 90, for example to the shell of a vehicle.

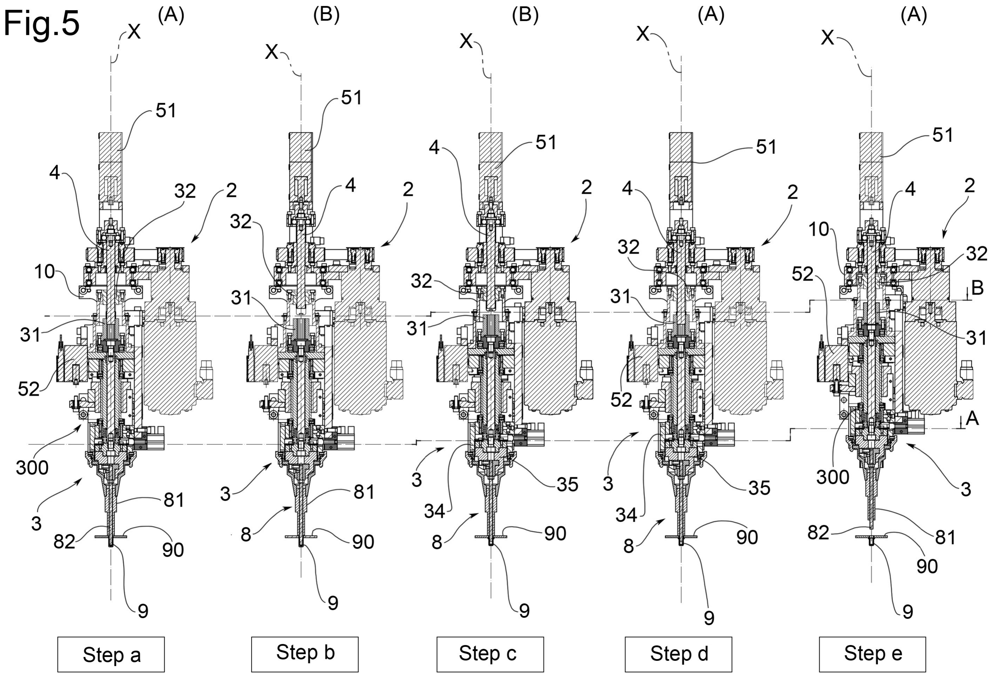

With reference to figure 5, the method according to the invention comprises the following steps:
a) providing an apparatus 1 according to one embodiment of the present invention, wherein the working head 3 engages a tool 8 comprising a retaining portion 81 abutting against the flat head 91 of the insert 9 and a threaded portion 82 which engages the shank 92 of the insert 9 inserted into a receiving body 90;
b) by means of the linear movement device 51, taking the drive shaft 4 into the second configuration B, in which the drive shaft 4 rotationally engages the second connection hub 32 and releases the first connection hub 31;
c) by means of the motor assembly 2, actuating the drive shaft 4 in rotation by translating the pulling portion 35 of the working head 3 and the threaded portion 82 of the tool 8 along the working axis X in a direction away from the receiving body 90, to cause deformation of the shank 92 of the insert 9;
d) by means of the linear movement device 51, taking the drive shaft 4 into the first configuration A, in which the drive shaft 4 rotationally engages the first connection hub 31 and releases the second connection hub 32;
e) by means of the motor assembly 2, actuating the drive shaft 4 in rotation in an unscrewing direction, by rotating the working head 3 to cause the unscrewing of the threaded portion 82 of the tool 82 from the shank 92 of the insert 9.

In one embodiment, step a) comprises the further substep of selecting a tool 8 having a threaded portion 82 sized to fit the shank 92 of the insert 9.

In one embodiment, step b) comprises the further substep of verifying that the drive shaft 4 is correctly aligned along the working axis X before taking it into the second configuration B.

In one embodiment, step c) comprises the further substep of monitoring the force applied during the translation of the pulling portion 35 to ensure controlled deformation of the shank 92 of the insert 9.

In one embodiment, step d) comprises the further substep of synchronizing the movement of the linear movement device 51 with the rotation of the drive shaft 4 to ensure a smooth transition to the first configuration A.

In one embodiment, step e) comprises the further substep of applying a predetermined unscrewing torque to avoid damage to the threaded portion 82 of the tool 8 during unscrewing from the shank 92 of the insert 9.

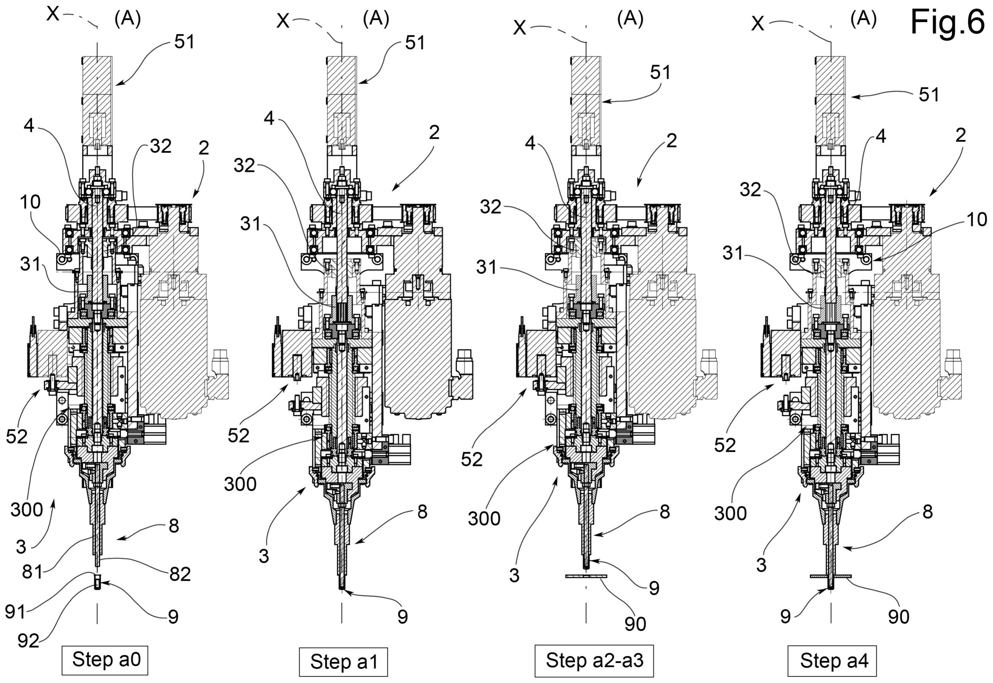

In a particularly advantageous embodiment, with reference to figure 6, step a) comprises the following substeps:
a0) providing:
   - an apparatus 1 in one embodiment of the present invention, wherein the working head 3 engages a tool 8 comprising a retaining portion 81 and a threaded portion 82;
   - an insert 9 comprising a head 91 and a shank 92;
   - a second linear movement device 52 operatively connected to the working head 3, suitable for moving the working head 3 in translation along the working axis X with respect to the drive shaft 4 between a raised position S and a lowered position L;
a1) by means of the motor assembly 2, actuating the drive shaft 4 in rotation in a screwing direction, by rotating the working head 3 to cause the screwing of the threaded portion 82 of the tool 8 into the shank 92 of the insert 9;
a2) by means of the second linear movement device 52, taking the working head 3 to the raised position S;
a3) by means of external movement means, for example a slide or a carriage on which the frame 10 of the apparatus 1 is mounted in a translatable manner, taking the apparatus 1 to the receiving body 90;
a4) by means of the second linear movement device 52, taking the working head 3 to the lowered position L by inserting the insert 9 into the receiving body 90.

In one embodiment, the method comprises a further initial step, prior to step a1), of providing an insert holder body 99 in which a plurality of inserts to be applied to the receiving body 90 are housed.

Also forming the subject matter of the present invention is a method for applying a second insert 9' in a receiving body 90.

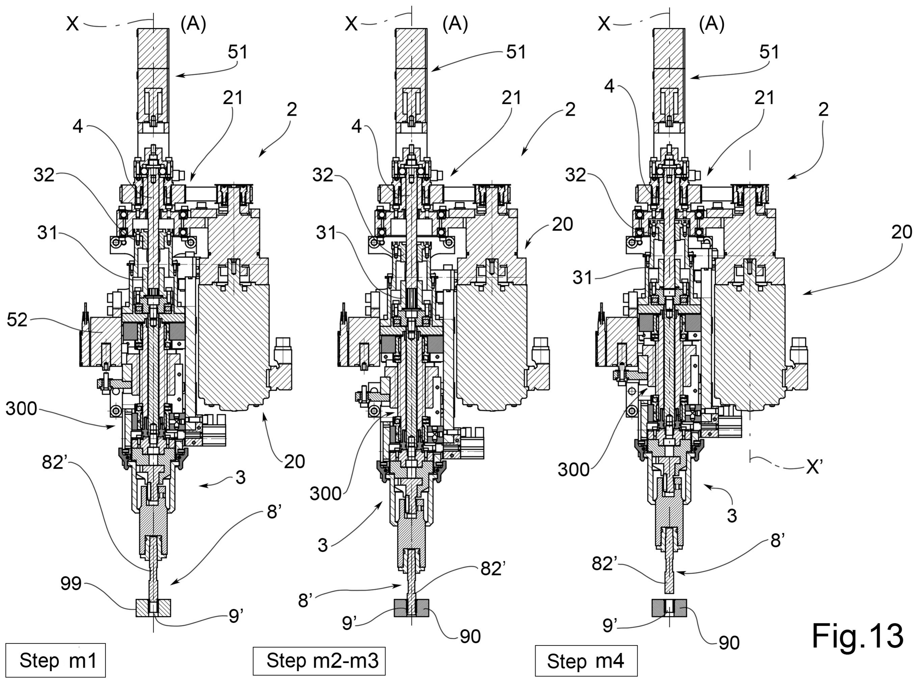

With reference to figure 13, the method according to the present invention comprises the following steps:
m1) providing a second insert 9' comprising a body having an internal thread 92' and an external thread 93', and providing an apparatus 1 according to any one of the preceding claims, wherein the working head 3 engages a second tool 8' comprising a threaded portion 82' which engages the internal thread 92' of the second insert 9';
m2) by means of the motor assembly 2, actuating the drive shaft 4 in rotation in a screwing direction, applying a first torque N1, preferably between 3 Nm and 7 Nm, extremes included, by rotating the working head 3 and the second insert 9' to cause the screwing of the external thread 93' into the receiving body 90;
m3) by means of the motor assembly 2, actuating the drive shaft 4 in rotation in a screwing direction, applying a second torque N2 much greater than said first torque N1, and preferably between 8 Nm and 27 Nm, extremes included, to cause the rolling of the external thread 93' into the receiving body 90 and to lock said second insert 9' into the receiving body 90;
m4) by means of the motor assembly 2, actuating the drive shaft 4 in rotation in an unscrewing direction, to unscrew the threaded portion 82' of the second tool 8' from the second insert 9'.

Advantageously, the selection of the specific range for the first torque N1 is critical to ensure that the second insert 9' overcomes the screwing friction in the receiving body 90 without prematurely triggering plastic deformation of the external thread 93'. Conversely, the selection of the range for the second torque N2 ensures that sufficient energy is applied to overcome the elastic limit of the material in order to obtain a permanent mechanical locking (rolling), while remaining below the threshold of tool breakage or damage to the thread of the receiving body.

Preferably, the apparatus comprises a control unit (not shown) configured to monitor in real time the torque absorbed by the motor assembly 2. The control unit is configured to automatically detect completion of the screwing operation (reaching the abutment) when the detected torque exceeds the threshold of the first torque N1, and to consequently command the increase in power necessary to apply the second rolling torque N2, without requiring intervention by the operator.

Innovatively, the present invention solves the drawbacks typical of the known art.

Advantageously, the apparatus according to the present invention allows all the operations necessary for the rapid application of threaded inserts and time-sert^{®} type inserts to be carried out with a single device.

Advantageously, the apparatus according to the present invention is compact and is suitable for operating in confined spaces such as the interior of a vehicle bodywork.

Advantageously, the apparatus according to the present invention is suitable for operating with heavy torques without discharging onto the motor the stresses generated by the operations.

According to a further advantage, the apparatus according to the present invention allows all operations to be carried out along the same working axis, to the benefit of the overall dimensions of the device.

According to a still further advantage, the apparatus according to the present invention prevents misalignment of the connection hubs from the working position thanks to the provision of locking assemblies with toothed ferrules and contrast teeth, which prevent their free rotation.

Advantageously, the apparatus according to the present invention allows easy replacement of the tool supported by the working head and therefore allows a single device to be used to install different types of inserts.

Advantageously, the apparatus according to the present invention is fully automated and does not require manual actions by the user either for feeding the inserts, or for positioning the inserts in the receiving seat, or for applying them.

It is clear that, with respect to the embodiments of the above-mentioned apparatus and methods, a person skilled in the art, in order to meet specific requirements, may make variations or substitutions of elements with others that are functionally equivalent.

Such variants are also included within the scope of protection as defined by the following claims. Furthermore, each variant described as belonging to a possible embodiment can be implemented independently of the other variants described.

In the appended claims, terms are used whose main definitions, based on the foregoing description of preferred embodiments, are set out below:
Apparatus: By the term "Apparatus" is meant a device designed for applying threaded inserts to a receiving body, comprising various components such as a frame, a motor assembly, a drive shaft and a working head.
Threaded insert: By the term "Threaded insert" is meant a component comprising a flat head and an internally threaded shank, used to create threads in materials where direct threading would be difficult or impossible.
Receiving body: By the term "Receiving body" is meant the structure or material into which the threaded insert is inserted, for example the shell of a vehicle, or a sheet metal element, or a plate.
Flat head: By the term "Flat head" is meant the upper part of the threaded insert that remains abutting against the receiving body.
Internally threaded shank: By the term "Internally threaded shank" is meant the part of the threaded insert that has an internal thread for coupling with a tool.
Frame: By the term "Frame" is meant the load-bearing structure of the apparatus that supports the motor assembly and other components.
Motor assembly: By the term "Motor assembly" is meant the set of components that provides the power necessary to actuate the drive shaft, comprising an electric motor and a transmission system.
Drive shaft: By the term "Drive shaft" is meant a component extending along a working axis and transmitting rotational motion from the motor assembly to the working head.
Working axis: By the term "Working axis" is meant the line along which the drive shaft extends and about which rotation and translation operations take place.
Working head: By the term "Working head" is meant the part of the apparatus that supports the tool and directly interacts with the threaded insert.
Tool: By the term "Tool" is meant a component supported by the working head, comprising a retaining portion and a threaded portion for coupling with the threaded insert.
Retaining portion: By the term "Retaining portion" is meant the part of the tool that abuts against the flat head of the threaded insert.
Threaded portion: By the term "Threaded portion" is meant the part of the tool that engages the internally threaded shank of the insert.
First connection hub: By the term "First connection hub" is meant a component of the working head that couples with the drive shaft in the first configuration to allow rotation.
Second connection hub: By the term "Second connection hub" is meant a component of the working head that couples with the drive shaft in the second configuration to allow translation.
Linear movement device: By the term "Linear movement device" is meant a component that allows translation of the drive shaft along the working axis.
First configuration: By the term "First configuration" is meant the position of the drive shaft in which it is coupled with the first connection hub to allow rotation of the working head.
Second configuration: By the term "Second configuration" is meant the position of the drive shaft in which it is coupled with the second connection hub to allow translation of the pulling portion.
Pulling portion: By the term "Pulling portion" is meant the part of the working head that moves in translation to pull the threaded insert with respect to the receiving body.
Outer surface: By the term "Outer surface" is meant the part of the drive shaft that may be grooved for coupling with the connection hubs.
Inner surface: By the term "Inner surface" is meant the part of the connection hubs that may be grooved for coupling with the drive shaft.
Electric motor: By the term "Electric motor" is meant the component of the motor assembly that provides the power to actuate the drive shaft.
Transmission system: By the term "Transmission system" is meant the set of components that connects the electric motor to the drive shaft.
Motor axis: By the term "Motor axis" is meant the line along which the electric motor extends, preferably parallel to and not coincident with the working axis.
Second linear movement device: By the term "Second linear movement device" is meant a component that allows translation of the working head along the working axis.
Raised position: By the term "Raised position" is meant the position of the working head when it is translated away from the receiving body.
Lowered position: By the term "Lowered position" is meant the position of the working head when it is translated toward the receiving body.
Ball screw system: By the term "Ball screw system" is meant a mechanism that converts rotation of the drive shaft into a linear translation movement.
Thread: By the term "Thread" is meant the part of the drive shaft that couples with the counter-thread of the second connection hub.
Counter-thread: By the term "Counter-thread" is meant the part of the second connection hub that couples with the thread of the drive shaft.
First locking assembly: By the term "First locking assembly" is meant a set of components that locks rotation of the second connection hub in the first configuration.
First toothed ferrule: By the term "First toothed ferrule" is meant a component of the first locking assembly that couples with a contrast tooth to lock rotation.
First contrast tooth: By the term "First contrast tooth" is meant a component that engages the first toothed ferrule to lock rotation of the second connection hub.
Second locking assembly: By the term "Second locking assembly" is meant a set of components that locks rotation of the first connection hub in the second configuration.
Second toothed ferrule: By the term "Second toothed ferrule" is meant a component of the second locking assembly that couples with a contrast tooth to lock rotation.
Second contrast tooth: By the term "Second contrast tooth" is meant a component that engages the second toothed ferrule to lock rotation of the first connection hub.
Linear position transducer: By the term "Linear position transducer" is meant a device that measures the travel of the working head and/or of the tool along the working axis.
Coupling and releasing means: By the term "Coupling and releasing means" is meant a mechanism that allows coupling and releasing of the tool from the working head.
External movement means: By the term "External movement means" is meant an external system that positions the apparatus at the receiving body. The apparatus can advantageously be applied as a working terminal (in English, end-effector) to a robotic arm movable in space in three directions, or on linear movement slides movable in a plane, or the frame can be fixed and allow translational movement only in the Y direction, for example in a workstation of an assembly plant.
Second insert: By the term "Second insert" is meant a component similar to the threaded insert, but having both an internal thread and an external thread, for example an insert known by the trade name time-sert^{®}.
Second tool: By the term "Second tool" is meant a component similar to the tool, but designed to interact with the second insert.
Internal thread: By the term "Internal thread" is meant the part of the second insert that couples with the threaded portion of the second tool.
External thread: By the term "External thread" is meant the part of the second insert that is screwed into the receiving body.
First torque: By the term "First torque" is meant the force applied to screw the second insert into the receiving body.
Second torque: By the term "Second torque" is meant a greater force applied to roll the second insert into the receiving body.

### LIST OF REFERENCES

- 1: apparatus
- 2: motor assembly
- 3: working head
- 4: drive shaft
- 6: first locking assembly
- 7: second locking assembly
- 8: tool
- 8': second tool
- 9: threaded insert
- 9': second insert
- 10: frame
- 20: electric motor
- 21: transmission system
- 30: coupling and releasing means
- 31: first connection hub
- 32: second connection hub
- 34: retaining portion of the working head
- 35: pulling portion of the working head
- 40: outer surface of the drive shaft
- 51: linear movement device
- 52: second linear movement device
- 60: first toothed ferrule
- 63: first contrast tooth
- 70: second toothed ferrule
- 74: second contrast tooth
- 81: retaining portion of the tool
- 82: threaded portion of the tool
- 82': threaded portion of the second tool
- 90: receiving body
- 91: flat head of the insert
- 92: internally threaded shank of the insert
- 92': internal thread of the second insert
- 93: external thread of the second insert
- 300: ball screw system
- 310: inner surface of the first connection hub
- 320: inner surface of the second connection hub
- 340: counter-thread of the second connection hub
- 400: thread of the drive shaft
- 500: external movement means
- 800: linear position transducer

### SYMBOLS

- X: working axis
- X': motor axis
- A: first configuration
- B: second configuration
- S: raised position
- L: lowered position
- T: pulled position
- N1: first torque
- N2: second torque

## Claims

1. An apparatus (1) for applying a threaded insert (9) to a receiving body (90), for example to the shell of a vehicle, wherein the insert (9) comprises a flat head (91) and an internally threaded shank (92),
wherein the apparatus (1) comprises a frame (10) and:
- a motor assembly (2) supported by the frame (10);
- a drive shaft (4) extending along and about a working axis (X) and supported by the frame and operatively connected to the motor assembly (2) and actuatable in rotation about said working axis (X);
- a working head (3) supported by the frame (10) and operatively connected to the drive shaft (4) and suitable for supporting a tool (8), wherein said tool comprises a retaining portion (81) suitable for abutting against the flat head (91) of the insert (9) and a threaded portion (82) suitable for engaging the shank (92) of the insert (9); said working head (3) comprising a first connection hub (31) and a second connection hub (32);
- a linear movement device (51) operatively connected to the drive shaft (4) for actuating it in translation along the working axis (X) with respect to the working head (3) between a first configuration (A), in which the drive shaft (4) rotationally engages said first connection hub (31) and releases said second connection hub (32), and a second configuration (B), in which the drive shaft (4) rotationally engages said second connection hub (32) and releases said first connection hub (31);
wherein, in the first configuration (A), a rotation of the drive shaft (4) about the working axis (X) is converted into a rotation of the working head (3) about the working axis (X), allowing the threaded portion (82) of the tool (8) to be screwed into and/or unscrewed from the insert (9);
and wherein the working head (3) comprises a retaining portion (34) suitable for remaining integral with the retaining portion (81) of the tool (8) and a pulling portion (35) connected to the second connection hub (32) and suitable for remaining integral with the threaded portion (82) of the tool (8),
and wherein, in the second configuration (B), the coupling between the drive shaft (4) and the second connection hub (32) allows converting a rotation of the drive shaft (4) about the working axis (X) into a translation along the working axis (X) of the pulling portion (35) with respect to the retaining portion (34), allowing the insert (9) to be pulled with respect to the receiving body (90).

2. Apparatus (1) according to claim 1, wherein the drive shaft (4) has an at least partially grooved outer surface (40), and the first connection hub (31) and the second connection hub (32) each have an at least partially grooved inner surface (310, 320) preferably parallel to the working axis (X), in a couplable manner by meshing with the outer surface (40) of the grooved shaft (4) .

3. Apparatus (1) according to claim 1 or 2, wherein the motor assembly (2) comprises an electric motor (20) and a transmission system (21) which connects said electric motor (20) to the drive shaft (4), preferably **characterized by** a reduction ratio equal to 2.

4. Apparatus (1) according to claim 3, wherein the electric motor (20) predominantly extends along a motor axis (X') parallel to and not coincident with the working axis (X), laterally with respect to the working head (3) and preferably cantilevered with respect to the frame (10).

5. Apparatus (1) according to any one of the preceding claims, comprising a second linear movement device (52), operatively connected to the working head (3) and wherein, in the first configuration (A), said second linear movement device (52) is suitable for moving the working head (3) in translation along the working axis (X) with respect to the drive shaft (4) between a raised position (S) and a lowered position (L).

6. Apparatus (1) according to any one of the preceding claims, wherein the second connection hub (32) is connected to a ball screw system (300), suitable for converting the rotation of the drive shaft (4) about the working axis (X) into a linear translation motion along said working axis (X) to move the pulling portion (35) between a lowered position (L) and a pulled position (T).

7. Apparatus (1) according to any one of claims 1 to 5, wherein the drive shaft (4) has a thread (400) and wherein the second connection hub (32) has a counter-thread (340) suitable for engaging said thread (400) to convert the rotary motion of the drive shaft (4) about the working axis (X) into a linear translation motion along said working axis (X) to move the pulling portion (35) between a lowered position (L) and a pulled position (T).

8. Apparatus (1) according to any one of the preceding claims, comprising a first locking assembly (6) configured to lock the rotation of the second connection hub (32) about the working axis (X) when the drive shaft (4) is in the first configuration (A).

9. Apparatus (1) according to claim 8, wherein the first locking assembly (6) comprises a first toothed ferrule (60) extending about the working axis (X) and integral with the second connection hub (32), and a first contrast tooth (63) movable to be engaged in the first toothed ferrule (60) to lock the free rotation of said second connection hub (32).

10. Apparatus (1) according to any one of the preceding claims, comprising a second locking assembly (7) configured to lock the rotation of the first connection hub (31) about the working axis (X) when the drive shaft (4) is in the second configuration (B) .

11. Apparatus (1) according to claim 10, wherein the second locking assembly (7) comprises a second toothed ferrule (70) extending about the working axis (X) and integral with the first connection hub (31), and a second contrast tooth (74) movable to be engaged in the second toothed ferrule (70) to lock the free rotation of said first connection hub (31).

12. Apparatus (1) according to any one of the preceding claims, comprising a linear position transducer (800) configured to measure the travel of the working head (3) and/or the tool (8) and/or the pulling portion (35) along the working axis (X).

13. Apparatus (1) according to any one of the preceding claims, wherein the working head (3) comprises coupling and releasing means (30) suitable for allowing the coupling and selective releasing for changing the tool (8).

14. A method of applying a deformation threaded insert (9) to a receiving body (90), for example to the shell of a vehicle, comprising the following steps:
a) providing an apparatus (1) according to any one of the preceding claims, wherein the working head (3) engages a tool (8) comprising a retaining portion (81) abutting against the flat head (91) of the insert (9) and a threaded portion (82) which engages the shank (92) of the insert (9) inserted into a receiving body (90);
b) by means of the linear movement device (51), taking the drive shaft (4) into the second configuration (B), in which the drive shaft (4) rotationally engages the second connection hub (32) and releases the first connection hub (31);
c) by means of the motor assembly (2), actuating the drive shaft (4) in rotation by translating the pulling portion (35) of the working head (3) and the threaded portion (82) of the tool (8) into the working axis (X) in a direction away from the receiving body (90), to cause the deformation of the shank (92) of the insert (9);
d) by means of the linear movement device (51), taking the drive shaft (4) into the first configuration (A), in which the drive shaft (4) rotationally engages the first connection hub (32) and releases the second connection hub (31);
e) by means of the motor assembly (2), actuating the drive shaft (4) in rotation in an unscrewing direction, by rotating the working head (3) to cause the unscrewing of the threaded portion (82) of the tool (8) from the shank (92) of the insert (9).

15. Method according to claim 14,
wherein step a) comprises the following substeps:
a0) providing:
- an apparatus (1) according to any one of claims 1 to 12, wherein the working head (3) engages a tool (8) comprising a retaining portion (81) and a threaded portion (82);
- an insert (9) comprising a head (91) and a shank (92);
- a second linear movement device (52) operatively connected to the working head (3), suitable for moving the working head (3) in translation along the working axis (X) with respect to the drive shaft (4) between a raised position (S) and a lowered position (L);
a1) by means of the motor assembly (2), actuating the drive shaft (4) in rotation in a screwing direction, by rotating the working head (3) to cause the screwing of the threaded portion (82) of the tool (8) into the shank (92) of the insert (9);
a2) by means of the second linear movement device (52), taking the working head (3) to the raised position (S);
a3) by means of the outer movement means (500), taking the apparatus (1) at the receiving body (90);
a4) by means of the second linear movement device (52), taking the working head (3) to the lowered position (L) by inserting the insert (9) into the receiving body (90).

16. A method of applying a second insert (9') in a receiving body (90), comprising the following steps:
m1) providing a second insert (9') comprising a body having an inner thread (92') and an outer thread (93'), and providing an apparatus (1) according to any one of claims 1 to 13, wherein the working head (3) engages a second tool (8') comprising a threaded portion (82') which engages the internally threaded body (92') of the second insert (9');
m2) by means of the motor assembly (2), actuating the drive shaft (4) in rotation in a screwing direction, by applying a first torque (N1) between 3 Nm and 7 Nm, extremes included, by rotating the working head (3) and the second insert (9') to cause the outer thread (93') to be screwed into the receiving body (90);
m3) by means of the motor assembly (2), actuating the drive shaft (4) in rotation in a screwing direction, by applying a second torque (N2) between 8 Nm and 27 Nm, extremes included, to cause the rolling of the outer thread (93') into the receiving body (90) and lock said second insert (9') into the receiving body (90);
m4) by means of the motor assembly (2), actuating the drive shaft (4) in rotation in an unscrewing direction, to unscrew the threaded portion (82') of the second tool (8') from the second insert (9').
